# EUROPEAN PATENT APPLICATION

(11) **EP 3 399 474 A1**
(43) Date of publication of application: **07.11.2018**
(21) Application number: 17169656.0
(22) Date of filing: 05.05.2017
(51) Int. Cl.: G06Q 10/02

(54) **EVENT MANAGEMENT SYSTEM**

(71) Applicant: Siemens Aktiengesellschaft, 80333 München (DE)
(72) Inventor: Khattab, Ahmed Mohamed, 81549 München (DE); Rindle, Kurt, 86199 Augsburg (DE)

(57) **Abstract**

In particular, the gist of the invention is the following: An event management system registering visitors via a set of RFiD/QR-code reading devices distributed across an event location, e. g. business conferences, fairs and exhibitions, and being connected to a network, consolidating at least the registration data received from the reading devices via a centralized backend server being connected to the network, collecting information about the visitors' interests in visitors' profiles stored in a database being connected to the network, matching visitors with exhibitors or other visitors based on the information about the visitors' profiles and stored information about the exhibitors via the centralized backend server and the data base and providing visitors with recommendations on interesting connections to make with exhibitors or other visitors based on the matching. It is an integrated solution and a combination between virtual match making platforms with physical match making and can be used for all events, exhibitions and conferences.

## Description

### Technical Field

The present disclosure relates to the field of improvement of organization and management of social events, e. g. business conferences, fairs and exhibitions, and their implementation in connection with application programs.

### Background Art

There are some manual methods for registration of attendees and there are physical systems using RFiD- or QR-codes technology for registration and tracking of visitors.

Further it is known to provide informative features like maps, digital content, distribution and exhibitors' profiles to visitors or attendees. Such a method is at least known from the application program "AllInTheloop app", http://www.allintheloop.com/features.html.

A problem may be here, e. g. that there may be is no integrated solution and that there is a gap between virtual match making and physical match making in this context.

Therefore, there is a need for a event management system which is supporting at least two target user groups like visitors and exhibitors, which is facilitating and automating the registration of visitors, as well as establishing engagement between exhibitors and visitors and which is ensuring that visitors easily get directions and suggestions for connections based on their interests/expertise.

According to the invention this need is settled by a system as it is defined by the features of independent claim 1. Preferred embodiments and appropriate computer program products are subject of the dependent claims.

### Summary of the invention

In particular, the gist of the invention is the following: An event management system registering visitors via a set of RFiD/QR-code reading devices distributed across an event location and being connected to a network, consolidating at least the registration data received from the reading devices via a centralized backend server being connected to the network, collecting information about the visitors' interests in visitors' profiles stored in a database being connected to the network, matching visitors with exhibitors or other visitors based on the information about the visitors' profiles and stored information about the exhibitors via the centralized backend server and the data base and providing visitors with recommendations on interesting connections to make with exhibitors or other visitors based on the matching. It is an integrated solution and a combination between virtual match making platforms with physical match making and can be used for all events, exhibitions and conferences.

### Brief Description of the Drawings

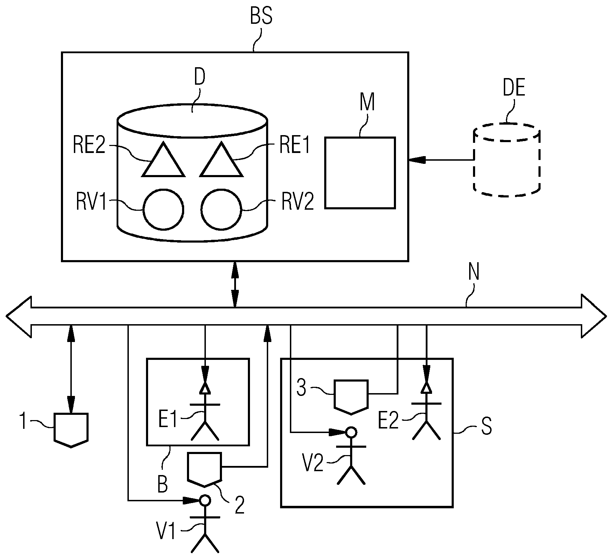

The method and the computer program according to the invention are described in more detail herein below by way of an exemplary embodiment and with reference to the attached drawing.

### Detailed description of exemplary embodiments

For example, for purposes of illustration, assume that visitors **V1**, **V2** are joining an event, e. g. a business conference, a fair or exhibition, with exhibitors **E1** and **E2.**

The drawing shows a schematic diagram illustrating an embodiment of the invention, wherein readers **1..3** and a centralized backend server **BS** are connected via a Network **N,** e. g. an infrastructure WiFi network.

The readers **1..3** are typically a set of RFiD/QR-code readers distributed across the exhibition/conference location and they are used for easily registering visitors joining the event, e. g. the visitors **V1** and **V2.**

The registration is done centrally at entrance points, see e. g. reader **1,** as well as at different booths **B,** see e.g. reader **2,** and/or at exhibition sections **S,** see for example reader **3.**

The centralized backend server **BS** is connected to the reader-devices **1..3** and has a internal data base **D** with visitor representations **RV1, RV2** and exhibitor representations **RE1, RE2.** The backend server **BS** is responsible for consolidating the registration data received from the reader devices **1..3** as well as other registration channels such as online registration and includes an intelligent match-making system **M** which makes use of information about visitor interests and exhibitors to provide recommendations on interesting connections to make with other visitors or exhibitors. The information about visitor interests and exhibitors are typically stored in the visitor representations **RV1, RV2** and exhibitor representations **RE1, RE2** of the internal data base **D.**

Optionally, the information about the visitors' interests is at least in part derived from the already visited booths **B** or exhibition sections **S.**

Optionally, the backend server **BS** can connect to private/ public professional directories **DE** to fetch more information about the registered visitors **V1, V2** and enrich their profiles resp. their data representations.

The match-making system **M** matches visitors with exhibitors or other visitors based on the information being stored in the visitor representations **RV1, RV2** and exhibitor representations **RE1, RE2** of the internal data base **D.**

The backend server **BS** finally provides visitors with recommendations on interesting connections to make with exhibitors or other visitors based on the matching.

The invention also provides computer programs or a computer program products for carrying out any of the systems described herein. A computer program embodying the invention may be stored on a computer-readable medium, or it could, for example, be in the form of a signal such as a downloadable data signal provided from an Internet website, or it could be in any other form.

This invention utilizes a front-end mobile application provided in two flavors for visitors and exhibitors respectively.

A visitor's app typically provides information, digital content, interactive maps and routing features to points of interest in the exhibition floor plan depending on the visitor's interests. Optionally, the visitor **V2** can also receive recommendations on booths **B** to visit or people **E1, V1** or **V2** to meet through this app.

An exhibitor's app provides the exhibitor **E1** with information about the visitors **V1** registered at his booth **B,** e. g. in order to track which visitors have been contacted/engaged by his team. Optionally, the exhibitor can also use the app to push special content or contact info to selected visitors.

In the foregoing specification, embodiments of the invention have been described with reference to numerous specific details that may vary from implementation to implementation. The specification and drawings are, accordingly, to be regarded in an illustrative rather than a restrictive sense.

## Claims

1. Event management system comprising
- registering visitors via a set of RFiD/QR-code reading devices distributed across an event location and being connected to a network,
- consolidating at least the registration data received from the reading devices via a centralized backend server being connected to the network,
- collecting information about the visitors' interests in visitors' profiles stored in a database being connected to the network,
- matching visitors with exhibitors or other visitors based on the information about the visitors' profiles and stored information about the exhibitors via the centralized backend server and the data base,
- providing visitors with recommendations on interesting connections to make with exhibitors or other visitors based on the matching.

2. Event management system according to claim 1,
- wherein the registering of the visitors is done at different booths or exhibition sections and
- wherein the information about the visitors' interests is derived from the visited booths or exhibition sections.

3. Event management system according to claim 2,
- wherein the centralized backend server connect to private/public professional directories to fetch more information about the registered visitors and enrich their profiles.

4. Event management system according to any one of the preceding claims,
- wherein the exhibitors are provided with information about the visitors registered at their booth or section.

5. Event management system according to any one of the preceding claims,
- wherein the centralized backend server is providing recommendations on booths to visit or people to meet to the visitors.

6. Event management system according to any one of the preceding claims,
- wherein the centralized backend server is providing information, digital content, interactive maps and routing features to points of interest in a plan of the event location to the visitors.

7. Event management system according to any one of the preceding claims,
- wherein the centralized backend server is providing the exhibitors with information to track which visitors have been contacted/engaged by the teams of the exhibitors.

8. Event management system according to any one of the preceding claims,
- wherein the centralized backend server is providing the exhibitors with information about the visitors registered at his booth, and
- wherein the centralized backend server is pushing special content or contact info to selected registered visitors.

9. A first computer program product comprising computer executable instructions, which when loaded on a visitors' smart device, provides the smart device with the functionality of the system according to any one of the preceding claims.

10. A second computer program product comprising computer executable instructions, which when loaded on an exhibitors' computer or smart device, provides the computer or smart device with the functionality of the system according to any one of the preceding claims.
